# FASCICULE DE BREVET EUROPEEN

(11) **EP 2 031 956 B1**
(45) Date de publication et mention de la délivrance du brevet: **17.08.2011**
(21) Numéro de dépôt: 07725358.1
(22) Date de dépôt: 18.05.2007
(51) Int. Cl.: A01G 9/12

(54) **DISPOSITIF DE FIXATION ET DE MAINTIEN D'UN PLANT GRIMPANT LE LONG D'UN FIL PORTEUR**
VORRICHTUNG ZUM BEFESTIGEN UND HALTEN EINER KRIECHENDEN PFLANZE ENTLANG EINEM TRÄGERDRAHT
DEVICE FOR FASTENING AND HOLDING A CREEPING PLANT ALONG A CARRYING WIRE

(30) Priorité: 15.06.2006 FR 0605348
(43) Date de publication de la demande: 11.03.2009
(73) Titulaire: A. Raymond et Cie., 38000 Grenoble (FR)
(72) Inventeur: MASSAGUER AGULLO, Miquel, E-08221 Terrassa (ES)
(74) Mandataire: Rüttgers, Joachim
(86) Numéro de dépôt international: PCT/EP2007/004450
(87) Numéro de publication internationale: WO 2007/144059

(56) Documents cités:
- EP-A1- 0 494 482
- DE-U1- 29 722 258
- FR-A2- 2 247 157
- US-A1- 3 800 365
- US-B1- 6 378 175

## Description

L'invention concerne un dispositif de fixation et de maintien d'un plant grimpant le long d'un fil porteur, comprenant une attache équipée de moyens de logement du plant, et d'organes d'accrochage du fil porteur.

Dans le domaine agricole, de nombreuses variétés de plantes grimpantes nécessitent d'être attachées à un fil porteur vertical lors de leur croissance. Le domaine où s'applique l'invention est notamment celui des tomates, concombres, haricots, etc... ayant une croissance verticale qu'il faut maîtriser. Une telle culture s'opère à grande échelle dans des serres, grâce à un réseau de fils porteurs verticaux attachés à des fils supports horizontaux situés à un niveau prédéterminé. Les plants sont mis en terre à proximité des fils porteurs verticaux, et au fur et à mesure de la croissance de la plante, il est nécessaire de la fixer à un fil porteur au moyen d'attaches. Sans la présence de ces attaches, la plante ne peut pas pousser. La plante pousse approximativement parallèlement le long du fil porteur vertical, lequel n'est pas fixé au niveau du sol, mais reste pendu depuis le fil support horizontal.

### Etat de la technique

Dans la culture des végétaux, il est connu de faire usage de liens souples pour attacher les plants à un support. La plupart de ces liens sont constitués par des frettes à autoserrage. La mise en place de ces frettes doit être effectuée avec précision pour conserver un certain jeu tenant compte de l'augmentation du diamètre des plants lors de la croissance. Les liens sont généralement en matière plastique biodégradable, ou en métal plastifié.

Le document CH 269995 décrit une attache en forme de pince utilisée pour maintenir une plante à un tuteur vertical enfoncé dans le sol. Le tuteur doit être rigide pour que l'extrémité de la pince puisse prendre prise. Une telle attache n'est pas adaptée pour un fil porteur de faible dimension et non rigide.

Le document CH 364498 se rapporte à une attache pour le support d'une plante, ladite attache étant conformée selon une épingle métallique, composée de deux branches élastiques mobiles dont les extrémités recourbées comportent des crochets pouvant s'accrocher l'un à l'autre. Les branches sont articulées autour d'une charnière constituant un ressort de torsion, lequel est enfilé longitudinalement sur un tuteur rigide. La présence de crochets sur l'épingle métallique peut néanmoins blesser l'utilisateur et endommager le plant lors de la mise en place.

Le document WO 02/084161 mentionne un clip à torsion, formé par une languette repliée au centre par une charnière de manière à former un V renversé. Chaque branche est dotée d'une ouverture sensiblement circulaire pour le logement de la plante à supporter, et d'une encoche adjacente dans laquelle peut être introduit un fil porteur. Un tel clip peut néanmoins glisser le long du fil porteur, et retomber vers le bas dans le cas d'un fil porteur vertical non rigide.

D'autres clips connus forment des colliers à charnières avec un effet de clippage positif. La fixation sur le fil porteur s'opère par pincement du fil au niveau de la charnière. La mise en place est compliquée car il faut bien positionner le fil porteur à ce niveau de la charnière. Des essais de vieillissement ont d'autre part démontré des problèmes de tenue mécanique suite à des cassures de la charnière, ou du système de clippage.

Le document EP 0 494 482 A1 décrit une attache en forme de pince. Les deux mors de la pince englobent la plante lors de leur fermeture. La liaison avec le fil porteur vertical se fait au niveau du centre de la pince par coincement entre les parties mobiles. Ce type de mécanisme présente une certaine complexité d'assemblage car il comporte deux mors, un élément ressort et un axe de liaison des deux mors mobiles. Un autre risque important est de venir écraser le corps de la plante lors de la fermeture des mors. Il y aurait donc destruction de la plante et celle-ci ne pourra plus grandir.

### Objet de l'invention

L'objet de l'invention consiste à réaliser une attache d'un plant grimpant le long d'un fil porteur, ayant une bonne tenue mécanique avec une mise en place rapide, et respectant l'environnement lors de la mise au rebut par compostage.

Le dispositif de fixation et de maintien selon l'invention est caractérisé en ce que l'attache est conformée en un anneau ouvert à surface gauche, composé :
- d'une âme annulaire délimitant un volume interne de réception du plant à travers une ouverture d'accès,
- d'une paire de crochets recourbés vers l'extérieur aux extrémités de l'âme pour former des encoches de retenue semi-ouvertes décalées dans le sens de la hauteur, et autorisant un effet de coincement du fil porteur dû à la déformation oblique par rapport à la direction verticale.

L'effet de coincement résulte du frottement du fil porteur à l'intérieur des encoches des deux crochets décalés. La mise en place de l'attache autour du plant grimpant et sur le fil porteur est facile et rapide, et ne nécessite aucune pièce mobile, charnière ou déformation de matière.

Selon un mode de réalisation préférentiel, l'attache comporte une première branche agencée avec l'un des crochets dans un même plan, et une deuxième branche s'étendant selon une portion d'hélice jusqu'à l'autre crochet situé à un autre niveau. L'encoche de chaque crochet est subdivisée en deux zones de sections différentes pour la retenue d'un fil porteur de diamètre prédéterminé, la zone postérieure au fond de l'encoche étant prévue pour un fil fin. Les deux zones de retenue du fil porteur sont séparées l'une de l'autre par un rétrécissement constituant un point dur pour le blocage du fil porteur à l'intérieur de la zone postérieure.

L'attache et le fil porteur sont réalisés de préférence en matière biodégradable, ce qui permet une mise au rebut rapide de l'ensemble plant (sans les fruits), attache, et fil porteur. L'exploitant agricole gagne ainsi un temps précieux sans avoir à effectuer le démontage complet des attaches et des fils porteurs. L'ensemble peut être mis directement au compostage après la récolte des fruits ou légumes.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
- la figure 1 est une vue schématique en perspective de l'attache selon l'invention, le fil porteur n'étant pas représenté ;
- la figure 2 montre une vue en plan de la figure 1 ;
- les figures 3 et 4 sont des vues de face et de profil de l'attache de la figure 1 ;
- la figure 5 représente l'attache de la figure 1 montée sur un fil porteur après introduction préalable du plant à l'intérieur de l'âme.

### Description d'un mode particulier de réalisation

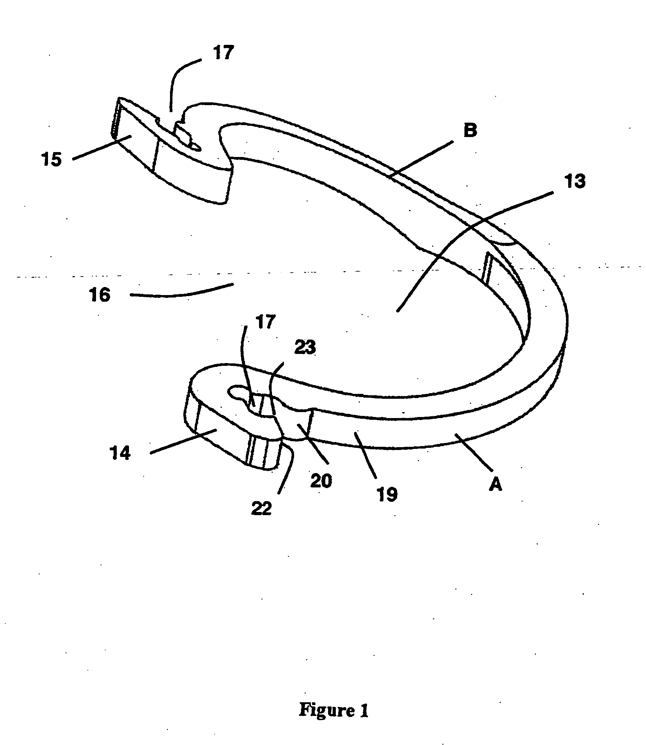

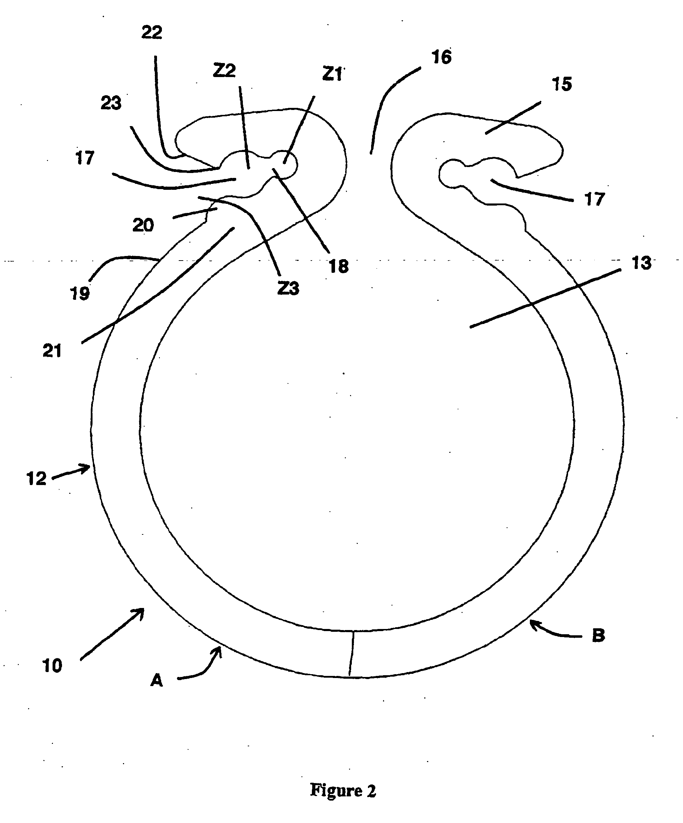

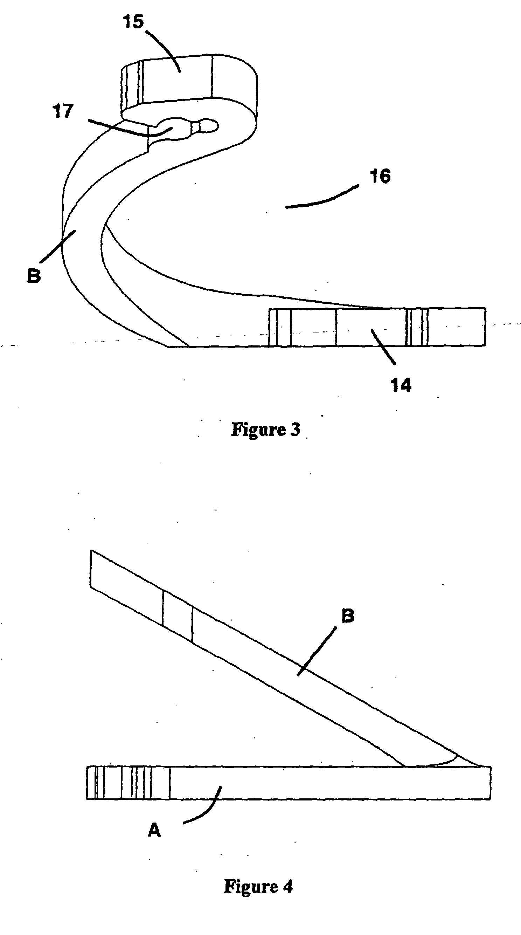

En référence aux figures 1 à 5, un dispositif de fixation et de maintien 10 d'un plant grimpant sur un fil porteur 11 vertical, comporte un clip ou attache 12 sans charnière conformé d'un seul tenant en anneau ouvert tridimensionnel. Le volume intérieur 13 de l'anneau correspond à l'espace disponible pour loger le corps du plant grimpant, tandis que le fil porteur 11 est accroché par coincement dans deux crochets 14, 15 prévus aux extrémités du clip 12.

Le clip 12 est avantageusement réalisé en matière biodégradable, ce qui évite le démontage des clips de fixation sur les fils porteurs après ramassage des fruits. Les fils porteurs peuvent également être réalisés en matière biodégradable, par exemple en papier, et pouvant être recyclés par compostage en même temps que le plant vidé de ses fruits et des clips 12.

L'anneau du clip 12 est composé d'une première branche A équipée d'un crochet 14, et d'une deuxième branche B dotée de l'autre crochet 15. La première branche A est agencée selon un demi-cercle s'étendant dans le même plan XY, alors que la deuxième branche B part de la zone médiane de l'anneau pour se prolonger selon une direction verticale en Z en constituant une portion d'hélice. Les sections des deux branches A et B sont sensiblement identiques, et le décalage tridimensionnel selon la direction en Z crée une ouverture 16 d'accès au volume intérieur 13 de l'anneau.

Le crochet 14 de la première branche A est recourbé vers l'extérieur en formant une encoche 17 semi-ouverte dans laquelle est introduit le fil porteur 11. L'intérieur de l'encoche 17 est subdivisé en deux zones Z1. Z2 de sections différentes séparées l'une de l'autre par un rétrécissement 18. La zone postérieure Z1 se trouve au fond de l'encoche 17, et sert au maintien du fil porteur 11 sur le clip 12. Le rétrécissement 18 constitue à la fois un point dur lors de l'introduction du fil porteur 11, et un organe de blocage du fil à l'intérieur de la zone postérieure Z1 de retenue.

La zone intermédiaire Z2 de plus grande dimension, est destinée à recevoir un fil porteur 11 de diamètre plus important que celui prévu pour la zone postérieure Z1.

L'entrée de l'encoche 17 comporte une zone d'introduction Z3 comprenant une surface de glissement 19 et un bossage 20 échelonnés le long de l'âme 21 et à l'extérieur du volume interne 13 du crochet 14. Le bossage 20 est disposé en regard d'une arête en biseau 22 en bout de crochet, et d'une saillie 23 d'arrêt, laquelle empêche l'échappement du fil porteur 11 hors de la zone de retenue Z2.

La structure du crochet 15 de la deuxième branche B est identique à celle du crochet 14. Les deux crochets 14, 15 se trouvent décalés à des niveaux différents et séparés l'un de l'autre par l'ouverture d'accès 16.

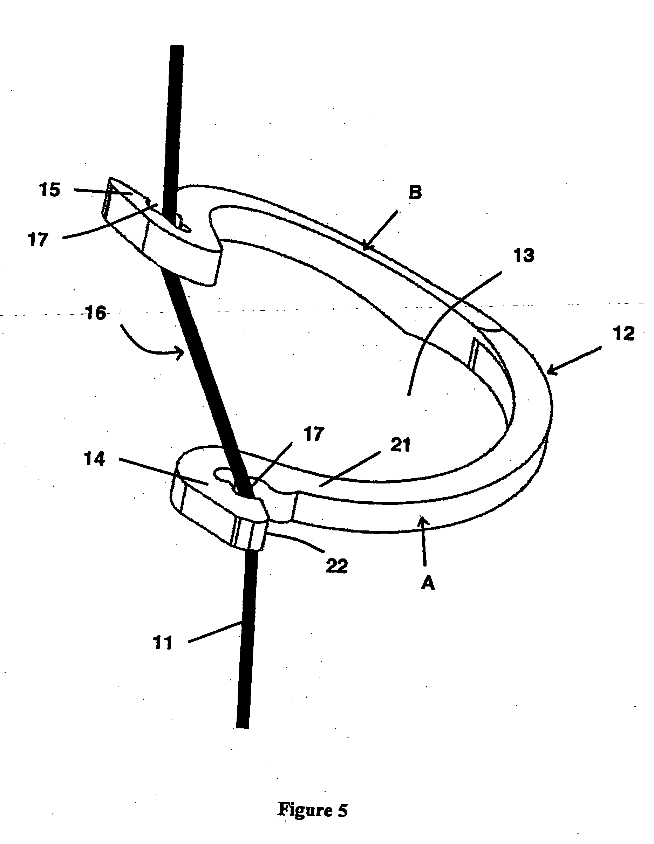

La mise ne place d'un clip 12 selon l'invention autour du corps du plant s'effectue de la manière suivante en référence à la figure 5 :

On présente l'ouverture 16 du clip 12 en regard du plant à supporter, et on introduit le corps du plant dans le volume intérieur 13 disponible de l'anneau. D'une main, on tourne ensuite le clip 12 d'un quart de tour pour introduire le fil porteur 11 dans l'encoche 17 du crochet 14 de la première branche A. L'autre main est utilisée pour accrocher le fil porteur 11 dans l'autre crochet 15 de la deuxième branche B. Le fil porteur 11 est incliné par rapport à la direction verticale lors du passage dans l'ouverture 16. Cette déformation dans le clip 12 engendre un effet de frottement à l'intérieur des crochets 14, 15, de manière à renforcer la tenue mécanique et le maintien du clip 12 sur le fil porteur 11.

## Revendications

1. Dispositif de fixation et de maintien d'un plant grimpant le long d'un fil porteur (11), comprenant une attache (12) équipée de moyens de logement du plant, et d'organes d'accrochage du fil porteur (11),
**caractérisé en ce que** l'attache (12) est conformée en un anneau ouvert à surface gauche, composé :
- d'une âme (21) annulaire délimitant un volume (13) interne de réception du plant à travers une ouverture d'accès (16),
- d'une paire de crochets (14,15) recourbés vers l'extérieur aux extrémités de l'âme pour former des encoches (17) de retenue semi-ouvertes décalées dans le sens de la hauteur, et autorisant un effet de coincement du fil porteur (11) dû à la déformation oblique par rapport à la direction verticale.

2. Dispositif de fixation et de maintien selon la revendication 1, **caractérisé en ce que** l'attache (12) comporte une première branche (A) agencée avec l'un des crochets (14) dans un même plan (XY), et une deuxième branche (B) s'étendant selon une portion d'hélice jusqu'à l'autre crochet (15) situé à un niveau prédéterminé.

3. Dispositif de fixation et de maintien selon la revendication 1 ou 2, **caractérisé en ce que** l'encoche (17) de chaque crochet (14,15) est subdivisée en deux zones (Z1,Z2) de sections différentes pour la retenue d'un fil porteur (11) de diamètre prédéterminé, la zone postérieure (Z1) au fond de l'encoche (17) étant prévue pour un fil fin.

4. Dispositif de fixation et de maintien selon la revendication 3, **caractérisé en ce que** les deux zones (Z1,Z2) de retenue du fil porteur (11) sont séparées l'une de l'autre par un rétrécissement (18) constituant un point dur pour le blocage du fil porteur à l'intérieur de la zone postérieure (Z1).

5. Dispositif de fixation et de maintien selon la revendication 3, **caractérisé en ce que** la zone intermédiaire (Z2) possède une dimension supérieure à celle de la zone postérieure (Z1), et est précédée à l'entrée de l'encoche (17) par un bossage (20) disposé en regard d'une arête en biseau (22) et d'une saillie (23) d'arrêt.

6. Dispositif de fixation et de maintien selon l'une des revendications précédentes, **caractérisé en ce que** l'attache (12) est monobloc et réalisée en matière biodégradable.

## Claims

1. Device for fixing and retaining a plant climbing along a support wire (11), comprising a tie (12) including means for accommodating the plant and members for hooking onto the support wire (11), **characterised in that** the tie (12) is in the shape of an open ring with a skewed surface, consisting of:
- an annular core (21) delimiting an internal volume (13) for receiving the plant via an access opening (16), and
- a pair of outwardly curved hooks (14, 15) at the ends of the core to form semi-open retaining notches (17) offset in the heightwise direction and allowing an effect of wedging the support wire (11) by virtue of deformation oblique to the vertical direction.

2. Fixing and retaining device according to claim 1, **characterised in that** the tie (12) includes a first branch (A) with one of the hooks (14) in a common plane (XY) and a second branch (B) extending along a portion of a helix as far as the other hook (15) situated at a predetermined level.

3. Fixing and retaining device according to claim 1 or claim 2, **characterised in that** the notch (17) of each hook (14, 15) is divided into two areas (Z1, Z2) with different sections for retaining a support wire (11) of predetermined diameter, the posterior area (Z1) at the far end of the notch (17) being intended for a thin wire.

4. Fixing and retaining device according to claim 3, **characterised in that** the two areas (Z1, Z2) for retaining the support wire (11) are separated from each other by a constriction (18) constituting a hard spot for locking the support wire in the posterior area (Z1).

5. Fixing and retaining device according to claim 3, **characterised in that** the intermediate area (Z2) has a dimension larger than that of the posterior area (Z1) and is preceded at the entrance of the notch (17) by a boss (20) disposed facing a bevelled edge (22) and a stop projection (23).

6. Fixing and retaining device according to any of the preceding claims, **characterised in that** the tie (12) is in one piece and made of biodegradable material.

## Patentansprüche

1. Vorrichtung zum Befestigen und Halten einer Rankpflanze entlang eines Trägerdrahts (11) mit einem Halter (12), der Pflanzenaufnahmemittel aufweist, und mit Befestigungsmitteln für den Trägerdraht (11),
**dadurch gekennzeichnet, dass** der Halter (12) als ein geöffneter Ring mit einer komplexen Oberfläche ausgestaltet ist, der
- über einen ringförmigen Steg (21), der ein Innenvolumen (13) zur Aufnahme der Pflanze durch eine Zugangsöffnung (16) begrenzt, und
- über ein Paar Haken (14, 15) verfügt, die an den Enden des Stegs nach außen gekrümmt sind, um halboffene, nach oben hin versetzte Rückhaltenuten (17) zu bilden, und die gestatten, auf den Trägerdraht (11) eine Klemmwirkung auszuüben, die auf die Schrägstellung in Bezug auf die senkrechte Richtung zurückzuführen ist.

2. Vorrichtung zum Befestigen und Halten nach Anspruch 1, **dadurch gekennzeichnet, dass** der Halter (12) einen ersten Schenkel (A), der mit einem der Haken (14) in derselben Ebene (XY) angeordnet ist, und einen zweiten Schenkel (B) aufweist, der sich einen Helixabschnitt beschreibend bis zu dem anderen Haken (15) erstreckt, der auf einem vorbestimmten Niveau liegt.

3. Vorrichtung zum Befestigen und Halten nach Anspruch 1 oder 2, **dadurch gekennzeichnet, dass** die Nut (17) jedes Hakens (14, 15) in zwei Bereiche (Z1, Z2) mit verschiedenen Abschnitten für das Zurückhalten eines Trägerdrahts (11) mit vorbestimmten Durchmesser unterteilt ist, wobei der hintere Bereich (Z1) im hinteren Teil der Nut (17) für einen dünnen Draht vorgesehen ist.

4. Vorrichtung zum Befestigen und Halten nach Anspruch 3, **dadurch gekennzeichnet, dass** die beiden Bereiche (Z1, Z2) für das Zurückhalten des Trägerdrahts (11) durch eine Verengung (18) voneinander getrennt sind, die einen festen Punkt für das Festlegen des Trägerdrahts innerhalb des hinteren Bereichs (Z1) bildet.

5. Vorrichtung zum Befestigen und Halten nach Anspruch 3, **dadurch gekennzeichnet, dass** der zwischenliegende Bereich (Z2) eine größere Abmessung als der hintere Bereich (Z1) aufweist und dem am Einlass der Nut (17) eine Erhebung (20) vorgelagert ist, die einer Schrägkante (22) und einem Arretiervorsprung (23) gegenüberliegt.

6. Vorrichtung zum Befestigen und Halten nach einem der vorangehenden Ansprüche, **dadurch gekennzeichnet, dass** der Halter (12) einstückig und aus einem biologisch abbaubaren Material gebildet ist.
